## Europäisches Patentamt
## European Patent Office
## Office européen des brevets

(19)

(11) Publication number: **0 004 764**
**B1**

(12) **EUROPEAN PATENT SPECIFICATION**

(45) Date of publication of patent specification: **20.01.82**

(21) Application number: **79300540.6**

(22) Date of filing: **02.04.79**

(51) Int. Cl.³: **G 01 D 5/14, G 01 P 3/481, G 01 P 3/54, H 01 G 7/02**

(54) A transducer for generating strobe signals.

(30) Priority: **03.04.78 IT 6771978**

(43) Date of publication of application:
**17.10.79 Bulletin 79/21**

(45) Publication of the grant of the European patent:
**20.01.82 Bulletin 82/3**

(84) Designated Contracting States:
**DE FR GB**

(56) References cited:
**US - A - 3 221 256**
**US - A - 3 517 282**

**ELECTRICAL ENGINEERING, vol. 81, November 1962**
**New York, U.S.A.**
**R. E. MATTHEW. "The use of electrets in electrostatic generators for space", pages 850—854**

(73) Proprietor: **Ing. C. Olivetti & C., S.p.a.**
**Via G. Jervis 77**
**I-10015 Ivrea (IT)**

(72) Inventor: **Fiorentino, Guido**
**Via Monte Giuliano 18**
**I-10015 Ivrea Turin (IT)**
Inventor: **Sella, Lino**
**Via Castellamonte 33/B**
**I-10010 Banchette Turin (IT)**

(74) Representative: **Pears, David Ashley**
**REDDIE & GROSE 16 Theobalds Road**
**London WC1X 8PL (GB)**

Courier Press, Leamington Spa, England.

A transducer for generating strobe signals

This invention relates to a transducer for generating strobe signals, in correspondence with the movement of an element which is movable with a linear or rotary motion past predetermined points on a plane containing a fixed element.

Strobe signal generators are widely used for generating clock pulses in coincidence with the movement of a movable member past preestablished points. The closer these points are, the higher is the power of the required resolution.

The most commonly used strobe signal generators use transducers based on magnetic principles. They include timing wheels shaped out of a magnetic material, and magnetic pickups including a permanent magnet material. The magnetic transducers have the inconvenience of a rather low resolving power and of small induced signals, requiring high-gain preamplifiers and squarers to provide usable timing pulses. An increase in the resolving power imposes very narrow mechanical tolerances, with the timing wheel rotating very close to the magnetic pick-up yet without touching it.

There are also known transducers based on the opto-electronic principles, wherein a slotted timing wheel selectively intercepts a light beam directed to a photosensitive device. The inconvenience of the opto-electronic transducer is that, particularly when a high resolving power is required, it must use sophisticated optical systems to obtain very narrow light beams; while at the same time the amplitude of the generated signals is very low, requiring a strong amplification, because of the small quantity of light passing through the slotted timing wheel.

The inconvenience of the known transducers are even more serious for the transducers of linear type, because of particular problems of precision, dimensions and cost.

It is also known from the U.S. patent 3,221,256 an electrostatic position transducer wherein a fixed member is provided with a pair of conductors each having a plurality of finger-like intermeshing extensions, while a movable member is provided with rectangular conductor segments. The pair of conductors are supplied with AC voltage, while the conductor of the movable member generates the output.

There are known dielectric materials, usually called "electrets", polarized in a permanent way, which are already in use for certain electro-mechanical transducers, such as microphones, loudspeakers and keyboards. These transducers comprise members movable one with respect to the other in the same direction as the polarization of the electret. In an article "the use of electrets in electrostatic generators for space" Robert E. Matthew, Electrical Engineering November 1962 pages 850 to 854 there is proposed an electrostatic generator for use in space travel comprising a ring of electrets supported on a rotating disc so that the electrets move in a circumferential direction, the electrets being polarized perpendicular to this direction.

In contrast to these known arrangements the problem underlying the present invention is to provide a strobe signal generator of low cost but which is nevertheless capable of a high resolving power.

The invention is defined in the appended claims, to which reference should now be made.

The invention will be described by way of example, with reference to the drawings, in which:—

Fig. 1 is a front view of one preferred transducer embodying the invention, for linear motion;

Fig. 2 is a detail of the same transducer;

Fig. 3 is a cross-section of the transducer of Figs. 1 and 2;

Fig. 4 is an axial cross-section of another embodiment of the invention, for rotary motion;

Fig. 5 is a view of the transducer of Fig. 4, taken on the line V—V;

Fig. 6 is another view of the transducer of Fig. 4, taken on line VI—VI;

Fig. 7 is a detail of a variant of the transducer of Fig. 4;

Fig. 8 is another detail of the variant of Fig. 7;

Fig. 9 is a diagram of a circuit for use with the transducer of Fig. 1 or Fig. 4; and

Fig. 10 is a diagram showing waveshapes of the strobe signals generated by the transducer.

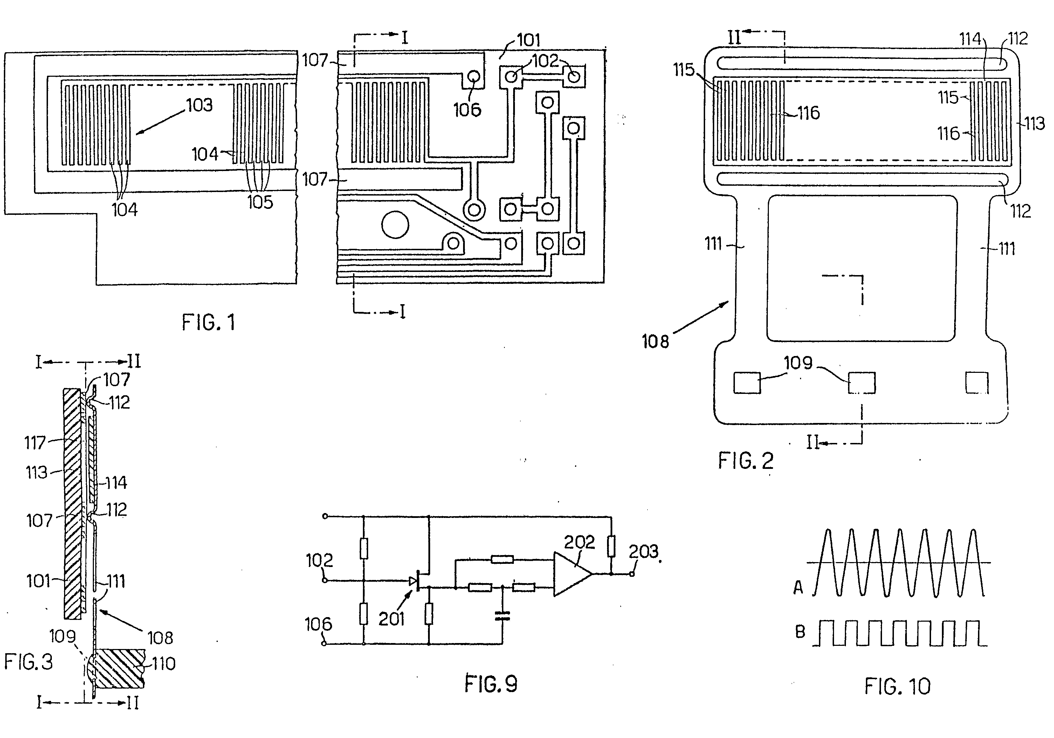

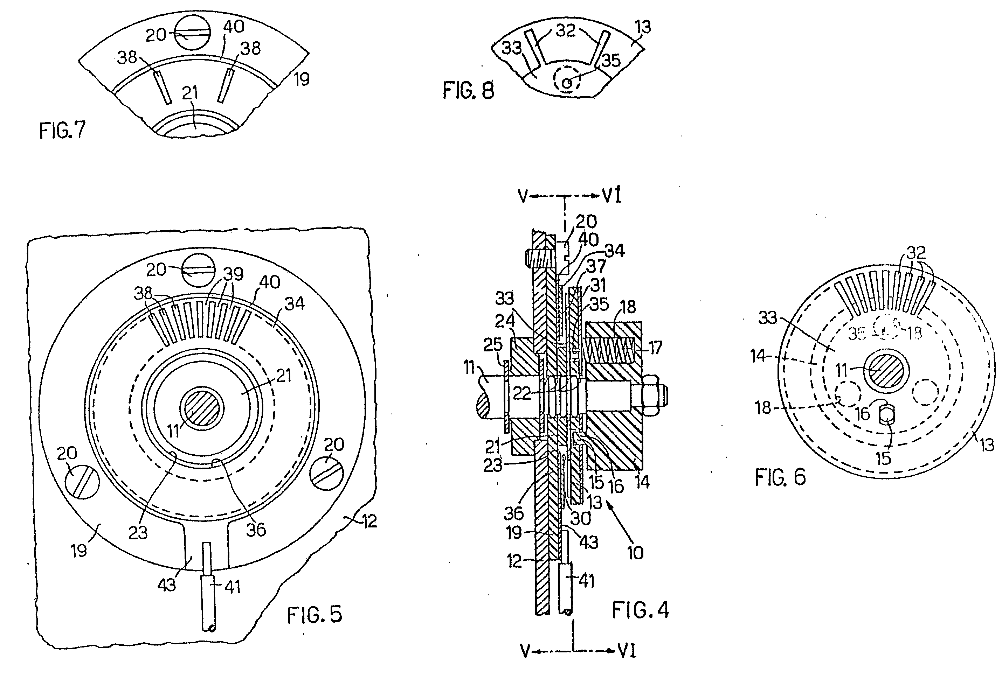

There will be described transducers which are suitable for the generation of strobe signals in response to both linear (Figs. 1, 2 and 3), and rotary (Figs. 4, 5, 6, 7 and 8) motion. It is convenient to describe the rotary transducer first.

The rotary transducers in common use are required to generate a series of strobe pulses in correspondence with the movement of a shaft through a number of regularly disposed angular positions. In the embodiment of Figs. 4, 5 and 6, the transducer illustrated generates 200 strobe pulses per turn of a driving shaft 11 to which it is secured. The shaft 11 rotates with respect to a metallic body 12 supporting the transducer. The shaft 11 rotates a coaxial disk 13 of printed circuit material having two faces, by means of a metallic sleeve 14 with a protruding pin 15 which cooperates with a slot 16 of the disk 13 (Fig. 6).

Three springs 17, inserted in blind holes 18 of the sleeve 14, push the disk 13 towards a fixed disk 19, which is coaxial with the shaft 11, formed out of a printed circuit board with one face, and fastened to the support 12 by means of screws 20. The fixed disk 19 of printed circuit material carries a conductive ring 40 with an internal hole 23, and insulated with respect to the body 12 and with an extension 43 from which starts a connector 41 carrying the generated strobe signals.

Between the two disks, the movable disk 13 and fixed disk 19, is interposed a metallic spacer washer 21 which is perfectly flat. Due to grooves 22 on the shaft 11 on both sides of the centre lines of the disks 13 and 19 and the washer 21, a small oscillation of the disks and the washer with respect to the shaft is allowed. In this way the disk 13 adapts to the orientation imposed by the washer 21, remaining parallel in every position of its rotation to the fixed disk 19, independently of any possible error in perpendicularity of the shaft 11 with respect to the body 12.

The shaft 11 rotates on bronze bearings 34. A collar 25 acts as a thrust bearing for the axial thrust produced by the springs 17.

With a precise photoetching process, 200 conducting spokes 32 (Fig. 6) are formed on that face 30 of the printed circuit of the movable disk 13 which is directed towards the fixed disk 19 (Fig. 6). The spokes are interconnected by a conducting ring 33. The other face 31 of the movable disk 13, not etched, is connected to the face 30 by a through connection 35 (Fig. 4). The springs 17 bear against the face 31, so that through said springs and said connection, the sleeve 14, the shaft 11 and the bearing 24, the spokes 32 of the movable disk 13 are held at the same electric potential as the body 12 (Fig. 6).

An electret disk 34 (Figs. 4 and 5) is glued over the fixed disk 19. This electret disk is constituted by a washer cut out of a sheet of a dielectric permanently polarizable material, known per se, which however is selectively polarized perpendicularly to the surface of the disk 34, as to create a flux pattern corresponding to that of the 200 spokes of the printed circuit of the face 30 of the movable disk 13 (Fig. 6).

The electret disk 34 of the illustrated example is of fluorine-ethyl-propylene, made by Du Pont and commercially known under the trade mark FEP, cut out of a sheet 1 mil thick (25 microns). The electret disk 34 is concentric with the shaft 11, and has an internal hole 36 of a diameter slightly larger than the diameter of the spacer washer 21. The washer 21 is 0.2 mm thick; the copper sheet of the printed circuits constituting the ring 40 of the fixed disk 19 and the spokes 32 of the movable disk 13 is 0.05 mm thick, so that the surface 37 of the electret disk 34 is located at a distance of 0.075 mm from the spokes 32 of the movable disk 13.

A preferred method for obtaining a selective polarization of the electret disk 34 consists in using a washer of electret material uniformly polarized by the known techniques, and selectively metallizing the face 37 of the washer carrying the embedded electric charge immediately under the surface, by vacuum deposition of an aluminium layer of a few Angstrom thickness through a mask reproducing a pattern with spokes 38 (Fig. 5), corresponding to that of the movable disk 13 of Fig. 6. The embedded charges are shielded by the metallization, so that the flux pattern of the electret disk 34 is limited to the non-metallized spokes 39. Another preferred method consists in selectively polarizing an unpolarized sheet of electret by means of corona discharge or electron bombardment, through a mask whose openings correspond to the required selective flux pattern of the electret.

An alternative method consists in the selective cancelling of the charges of a uniformly polarized electret by means of selective heating, for instance bringing the areas in which it is desired to cancel the charges in contact with a tool reproducing the pattern of the metallized areas 38 of Fig. 5 and which is heated to a temperature of about 300°C. Other possible methods are based on the use of an electret sheet from which are punched out the areas corresponding to the metallization 38, or of separate strips of electret substituting the spokes 32 of the electret disk 34.

It is evident that with all these methods, electric charges intermittently interpose between the conducting spokes 32 (Fig. 6) of the movable disk 13 and the ring 40 of the fixed disk 19, so that the rotation of the movable disk 13 causes an electrostatic induction which is variable with the variation in the facing of the spokes 32 of the movable disk 13 with the polarized spokes 39 of the electret disk 34 (Fig. 5).

As a consequence, a periodically variable electrostatic voltage is induced on the ring 40 of the fixed disk 19 under the electret disk 34, with a frequency of 200 full waves per turn of the shaft 11, as many as the times per turn that the spokes 32 of the movable disk 13 are aligned with the non-metallized spokes 39 of the electret disk 34. The generated voltage has the shape of a triangular wave with slightly rounded points, corresponding to the periodic increase and decrease of the facing of the spokes 32 of the movable disk 13 with the spokes 39 of the electret disk 34, as shown at A in Fig. 10.

In one example the generated voltage has an amplitude of 5 volts peak-to-peak at a velocity of rotation of the shaft 11 of 1000 RPM, with a frequency of 3.3 KHz. Because of its quite large amplitude, such strobe signal does not usually need amplification. If a square strobe signal is desired (B in Fig. 10) a very simple squaring circuit can be used, such as the one indicated in Fig. 9, in which the FET preamplifier 201 and amplifier 202 are inexpensive commercial semiconductors.

To the disclosed example it is possible to introduce a number of variations. It is possible for instance to exchange the position of the electret disk 34 and of the spokes of the printed circuit of the movable disk 13, having a rotating electret disk and fixed printed circuit spokes, or even to use an electrostatic shield with conductive spokes rotating between a fixed selectively-charged electret and a uniformly conductive armature. It is possible to use different numbers of spokes for the printed circuit and the electret disk, in particular it is possible to have only one spoke, or a limited number of spokes on the electret disk 34, and a number of spokes in different angular positions on the printed circuit, or *vice versa*, when it is desired to generate strobe signals in irregularly disposed angular positions of the rotation of the shaft 11.

It is also possible to use regularly spaced spokes with different numbers for the electret disk 34 and for the printed circuit, in order to increase the number of strobe pulses per turn of the shaft 11 without being obliged to multiply the number of the spokes. If in fact the numbers of the regularly disposed spokes, N and M respectively, are mutually prime integral numbers, the generated strobe signal has a frequency of N times M pulses per turn. This solution is illustrated as an example in Figs. 7 and 8, where N = 8 and M = 9, generating 72 strobe pulses per turn.

What has been said for the rotary transducer of Figs. 4, 5 and 6 is valid also for explaining the operation of the linear transducer of Figs. 1, 2 and 3, the simplicity and reduced dimensions of which are particularly evident with respect to the linear transducers of known type.

Fig. 1 shows the fixed member of the linear transducer, which is derived out of a printed circuit board 101 carrying at the same time the amplifying circuit of Fig. 9 and other circuits of the apparatus in which the transducer is used. The strobe signals are available at terminals 102, electrically connected to a printed circuit comb 103 in which conductive strips 104 alternate with insulating strips 105.

The other end of the strobe circuit of Fig. 9 corresponds to a terminal 106 of the printed circuit board 101 which is connected to two conductive strips 107 situated on both sides of the comb 103.

The movable member of the linear transducer is a runner 108 (Fig. 2), punched out of a bronze sheet 0.3 mm thick, with two flexible arms 111 and two drawn sliders 112 (Figs. 2 and 3) protruding 0.1 mm. The runner 108 is fastened through square holes 109 to the member 110 whose linear displacement is to be strobed.

The flexible arms 111 are preloaded, so that the sliders 112 exert a slight pressure against the conductive strips 107 on which they slide, ensuring an electrical contact between the runner 108 and the printed board terminal 106 and at the same time keeping a face 113 of the runner 108 (Fig. 3) precisely at a distance of 0.1 mm with respect to the conductive strips 104 of the comb 103.

A rectangular sheet of electret material 114 is glued onto the face 113 of the runner 108 (Figs. 2 and 3). Said sheet 114 is selectively polarized following the already described technique, alternating metallized strips 115 and non-metallized strips 116 (Fig. 2), with the same pitch as the conductive strips 104 and the insulating strips 105 of the comb 103.

The thickness of the sheet 114 is 25 microns, so that its surface 117 is located at a distance of 0.075 mm from the comb 103 (Fig. 3). The displacement of the runner 108 causes the induction of variable electrostatic strobe signals on the terminal 102, exactly as in the case of the rotary transducer. In the example the pitch between the strips 105 of the comb 103 is of 0.6 mm so that a full wave of strobe signal is generated for every 0.6 mm of displacement.

Because of its simplicity and low cost, the transducers are suitable for a large number of applications, for instance for the generation of strobe signals for tabulating devices, for the velocity control of motors, for mileage and speed meters, and for spark timing devices of cars.

The characteristics of the generated strobe signals are particularly suited for the requirements of the integrated MOS circuits, most promising for such applications.

**Claims**

1. A position transducer for generating strobe signals in response to a relative movement of a pair of facing members (12, 14; 101, 110) along a predetermined direction, comprising a printed circuit (32, 33; 103) secured to a first one of the members (14; 101) to face the other of the members (12, 110), the printed circuit being formed with a common conductor (33) extending parallel to the direction of the said relative movement and connected to a plurality of substantially rectangular conductors (32; 104) extending transverse to the said direction and indicating a plurality of relative positions of the members, and a sheet of conductive material (40; 108) carried by the said other member (12; 110) to face the printed circuit, characterised by an electret element (34; 114) secured to the conductive sheet (40; 108) and permanently electrostatically polarized to generate a flux pattern perpendicular to the said direction and varying along the said direction, whereby the said conductors intermittently cooperate with the flux pattern of the electret element in response to said relative movement to generate, by electrostatic induction on the said sheet, strobe signals indicative of the said relative position.

2. A transducer according to claim 1, characterised in that the said conductors (32; 104) are equidistant with a predetermined pitch, the electret element comprising a plurality of substantially rectangular polarized areas (39; 116) equidistantly spaced from each other with a pitch equal to the pitch of the conductors, the strobe signals being generated by the cumulative action of the electrostatic induction of the polarized areas of the electret element on the said sheet, an additional conductor (41; 107) being electrically connected to the said sheet for picking up the strobe signals.

3. A transducer according to claim 2, characterised in that the electret element is formed from a sheet of electret material secured to the sheet of conductive material and selectively polarized so as to present the plurality of substantially rectangular polarized areas alternating with substantially rectangular non-polarized areas.

4. A transducer according to claim 3, characterised in that the first member is stationary and the other member is rectilinearly movable with respect to the first member, the printed circuit also including the said additional conductor (107), the sheet of conductive material (108) including a protruding portion (112) for guiding the polarized areas as to be moved at a predetermined constant distance from the plurality of conductors (104) and being yieldable for causing the protruding portion to slidably contact the additional conductor.

5. A transducer according to claim 3, characterised in that the said other member (12) is stationary, the first member (14) being connected to a disk (13) rotatable with respect to the other member, the said sheet (40) being annular and the additional conductor (41) being permanently connected to the sheet of conductive material.

6. A transducer according to claim 5, characterised in that the disk (13) is rotationally fast with a rotatable shaft (11), and by a washer (21) mounted on the shaft between the disk and the stationary member (12, 19) for guiding the disk to have the polarized areas at a predetermined distance from the plurality of conductors, and biasing means (17) for axially urging the disk toward the stationary member.

7. A transducer according to claim 6, characterised in that the shaft (11) is provided with annular grooves (22) located on both sides of the centre lines of the disk (13), the washer (21) and the stationary member (19), the biasing means including a plurality of compression springs (17) located between the disk (13) and the first member (14).

8. A transducer according to any of claims 3 to 7, characterized in that the flux pattern is created by selectively polarizing the electret material through the openings of a mask.

9. A transducer according to any of claims 3 to 7, characterized in that the flux pattern is created in the electret material by selectively cancelling the polarization on a uniformly polarized electret material.

10. A transducer according to claim 9, characterized in that the selective cancelling is effected by selectively metallizing the uniformly polarized electret material.

11. A transducer according to claim 9, characterized in that the selective cancelling is effected by selectively heating the uniformly polarized electret material.

12. A transducer according to any of claims 3 to 7, characterized in that the flux pattern is obtained by cutting or punching a uniformly polarized electret material.

**Patentansprüche**

1. Positionswandler zur Erzeugung stroboskopischer Signale aufgrund einer relativen Bewegung eines Paares einander gegenüberliegender Teile (12, 14; 100, 110) längs einer vorbestimmten Richtung, enthaltend eine gedruckte Schaltung (32, 33; 103), die an einem ersten der Teile (14; 101) so befestigt ist, daß sie dem anderen der Teile (12; 110) gegenüberliegt, und die mit einem gemeinsamen Leiter (33; 104) gebildet ist, der sich parallel zur Richtung der relativen Bewegung erstreckt und mit einer Vielzahl im wesentlichen rechteckförmiger Leiter (32; 104) verbunden ist, die sich quer zu der Richtung erstrecken und eine Vielzahl relativer Positionen der Teile anzeigen, und enthaltend eine von dem anderen Teil (12; 110) getragene und der gedruckten Schaltung gegenüberliegende dünne Platte aus leitendem Material (40; 108), gekennzeichnet durch ein Elektret-Element (34; 114), das an der leitenden dünnen Platte (40; 108) befestigt und permanent elektrostatisch polarisiert ist, um ein zu der Bewegungsrichtung senkrechtes Flußmuster zu erzeugen, das sich längs dieser Richtung ändert, wobei aufgrund der relativen Bewegung der Teile die Leiter mit dem Flußmuster des Elektret-Elements zusammenarbeiten, um durch elektrostatische Induktion an der dünnen Platte stroboskopische Signale zu erzeugen, die die relative Position der Teile anzeigen.

2. Wandler nach Anspruch 1, dadurch gekennzeichnet, daß die Leiter (32; 104) mit einer vorbestimmten Teilung abstandsgleich angeordnet sind, das Elektret-Element eine Vielzahl im wesentlichen rechteckförmiger polarisierter Bereiche (39; 116) enthält, die mit einer Teilung, die gleich der Teilung der Leiter ist, abstandsgleich voneinander angeordnet sind, die stroboskopischen Signale durch kumulative Wirkung der elektrostatischen Induktion der polarisierten Bereiche des Elektret-Elements auf der dünnen Platte erzeugt werden und ein zusätzlicher Leiter (41; 107) zur Abnahme der stroboskopischen Signale mit der dünnen Platte elektrisch verbunden ist.

3. Wandler nach Anspruch 2, dadurch gekennzeichnet, daß das Elektret-Element aus einer dünnen Platte aus Elektret-Material gebildet ist, die an der dünnen Platte aus leitendem Material befestigt und selektiv so polarisiert ist, daß die vielen im wesentlichen rechteckförmigen polarisierten Bereiche mit im wesentlichen rechteckförmigen nicht polarisierten Bereichen abwechseln.

4. Wandler nach Anspruch 3, dadurch gekennzeichnet, daß das erste Teil feststehend und das andere Teil in bezug auf das erste Teil rechtwinklig bewegbar ist, die gedruckte Schaltung auch den zusätzlichen Leiter (107) enthält und die dünne Platte aus leitendem Material (108) einen vorspringenden Abschnitt (112) aufweist, der die polarisierten Bereiche so führt, daß sie unter Einhaltung eines vorbestimmten konstanten Abstands von der Vielzahl der Leiter (104) bewegbar sind, sowie nachgiebig ist, um den vorspringenden Abschnitt in gleitender Berührung mit dem zusätzlichen Leiter zu halten.

5. Wandler nach Anspruch 3, dadurch gekennzeichnet, daß das andere Teil (12) feststehend ist, das erste Teil (14) mit einer gegenüber dem anderen Teil drehbaren Scheibe (13) verbunden ist, die leitende dünne Platte (40) ringförmig ist und der zusätzliche Leiter (41) mit der dünnen Platte aus leitendem Material dauerhaft verbunden ist.

6. Wandler nach Anspruch 5, dadurch gekennzeichnet, daß die Scheibe (13) mit einer drehbaren Welle (11) drehfest verbunden ist, daß eine Zwischenscheibe (21) zwischen der Scheibe und dem feststehenden Teil (12, 19) auf der Welle angeordnet ist, um die Scheibe so zu führen, daß die polarisierten Bereiche einen vorbestimmten Abstand von der Vielzahl der Leiter haben, und daß eine Vorspannvorrichtung (17) die Scheibe in Achsenrichtung gegen das feststehende Teil drückt.

7. Wandler nach Anspruch 6, dadurch gekennzeichnet, daß die Welle (11) mit Ringnuten (22) versehen ist, die zu beiden Seiten der Mittenlinien der Scheibe (13), der Zwischenscheibe (21) und des feststehenden Teils (19) angeordnet sind, und daß die Vorspannvorrichtung eine Vielzahl von Druckfedern (17) aufweist, die zwischen der Scheibe (13) und dem ersten Teil (14) angeordnet sind.

8. Wandler nach einem der Ansprüche 3 bis 7, dadurch gekennzeichnet, daß das Flußmuster durch selektives Polarisieren des Elektret-Materials durch die Öffnungen einer Maske entstanden ist.

9. Wandler nach einem der Ansprüche 3 bis 7, dadurch gekennzeichnet, daß das Flußmuster in dem Elektret-Material durch selektives Löschen der Polarisation auf einem gleichförmig polarisierten Elektret-Material entstanden ist.

10. Wandler nach Anspruch 9, dadurch gekennzeichnet, daß das selektive Löschen durch selektives Metallisieren des gleichförmig polarisierten Elektret-Materials bewirkt worden ist.

11. Wandler nach Anspruch 9, dadurch gekennzeichnet, daß das selektive Löschen durch selektives Erhitzen des gleichförmig polarisierten Elektret-Materials bewirkt worden ist.

12. Wandler nach einem der Ansprüche 3 bis 7, dadurch gekennzeichnet, daß das Flußmuster durch Schneiden oder Stanzen eines gleichförmig polarisierten Elektret-Materials entstanden ist.

**Revendications**

1. Transducteur de position générateur de signaux repères en réponse à un mouvement relatif de deux organes se faisant face (12, 14; 101, 110) sur une direction prédéterminée, comportant un circuit imprimé (32, 33; 103) fixé sur le premier des organes (14; 101) pour être en regard avec l'autre organe (12; 110), le circuit imprimé étant formé avec un conducteur commun (33; 104) disposé parallèlement à la direction du mouvement relatif et raccordé à une pluralité de conducteurs sensiblement rectangulaires (32; 104) disposés transversalement à cette direction et représentatifs d'une pluralité de positions relatives des organes, et une feuille en matériau conducteur (40; 108) portée par l'autre organe (12; 110) de manière à être en regard avec le circuit imprimé, caractérisé par un organe électret (34; 114) fixé sur la feuille conductrice (40; 108) et polarisé électrostatiquement de manière permanente pour créer une figure de flux perpendiculaire à la direction précitée et variant le long de cette direction, de sorte que les conducteurs coopèrent de manière intermittente avec la figure de flux de l'organe électret pour engendrer en réponse au mouvement relatif précité, par induction électrostatique dans la feuille précitée, des signaux repères représentatifs de la position relative des organes.

2. Transducteur selon la revendication 1, caractérisé en ce que les conducteurs (32; 104) sont équidistants avec un pas prédéterminé, l'organe électret comportant une pluralité de zones polarisées sensiblement rectangulaires (39; 116), équidistantes l'une de l'autre avec un pas égal au pas des conducteurs, les signaux repères étant formés par effet cumulatif de l'induction électrostatique des zones polarisées de l'organe électret dans la feuille, un conducteur supplémentaire (41; 107) étant raccordé électriquement à cette feuille pour collecter les signaux repères.

3. Transducteur selon la revendication 2, caractérisé en ce que l'organe électret est formé à partir d'une feuille de matériau électret fixée à la feuille de matériau conducteur et polarisée sélectivement de manière à présenter la pluralité de zones polarisées sensiblement rectangulaires en alternance avec des zones non polarisées sensiblement rectangulaires.

4. Transducteur selon la revendication 3, caractérisé en ce que le premier organe est fixe et que l'autre organe est mobile en mouvement rectiligne par rapport au premier, le circuit imprimé comportant également le conducteur supplémentaire (107), la feuilles de matériau conducteur (108) comportant une partie en saillie (112) pour guider les zones polarisées afin qu'elles se déplacent à distance prédéterminée constante de la pluralité de conducteurs (104), et étant déformable pour que la partie en saillie soit en contact coulissant avec le conducteur supplémentaire.

5. Transducteur selon la revendication 3, caractérisé en ce que ledit autre organe (12) est fixe, le premier organe (14) étant fixé sur un disque (13) tournant par rapport à l'autre organe, la feuille (40) étant annulaire et le conducteur supplémentaire (41) étant raccordé en permanence à la feuille de matériau conducteur.

6. Transducteur selon la revendication 5, caractérisé en ce que le disque (13) est fixé en rotation avec un arbre rotatif (11), en ce qu'une rondelle (21) est montée sur l'arbre entre le disque et l'organe fixe (12, 19) pour guider le disque de manière que les zones polarisées soient à distance prédéterminée de la pluralité de conducteurs, et en ce que des moyens de rappel (17) repoussent axialement le disque vers l'organe fixe.

7. Transducteur selon la revendication 6, caractérisé en ce que l'arbre (11) est pourvu de gorges annulaires (22) situées de chaque côté des axes du disque (13), de la rondelle (21) et de l'organe fixe (19), les moyens de rappel comportant une pluralité de ressorts de compression (17) situés entre le disque (13) et le premier organe (14).

8. Transducteur selon l'une des revendications 3 à 7, caractérisé en ce que la figure de flux est créée par une polarisation sélective du matériau d'électret, à travers les ouvertures d'un masque.

9. Transducteur selon l'une des revendications 3 à 7, caractérisé en ce que la figure de flux est créée dans le matériau d'électret par destruction sélective de la polarisation sur un matériau d'électret uniformément polarisé.

10. Transducteur selon la revendication 9, caractérisé en ce que la destruction sélective est effectuée par une métallisation sélective du matériau d'électret uniformément polarisé.

11. Transducteur selon la revendication 9, caractérisé en ce que la destruction sélective est effectuée par chauffage sélectif du matériau d'électret uniformément polarisé.

12. Transducteur selon l'une des revendications 3 à 7, caractérisé en ce que la figure de flux est obtenue par découpe ou perforation d'un matériau d'électret uniformément polarisé.

FIG. 1

FIG. 2

FIG. 3

FIG. 9

FIG. 10

FIG.7

FIG. 8

FIG. 5

FIG. 4

FIG. 6

0 004 764